Europäisches Patentamt

European Patent Office

Office européen des brevets

(19)

(11) Publication number : **0 511 180 A1**

(12) **EUROPEAN PATENT APPLICATION**

(21) Application number : **92830193.6**

(22) Date of filing : **23.04.92**

(51) Int. Cl.⁵ : **H02N 11/00, F24J 3/08**

PRIORITY 240491 IT FI91000093. >2

(30) Priority : **24.04.91 IT FI93**

(43) Date of publication of application :
**28.10.92 Bulletin 92/44**

(84) Designated Contracting States :
**AT BE CH DE DK ES FR GB GR LI LU MC NL PT SE**

(71) Applicant : **PRO.CO.GEN. PROGETTAZIONI E COSTRUZIONI GENERALI S.p.A.**
**Via dei Della Robbia 89**
**I-50132 Firenze (IT)**

(72) Inventor : **Gentile, Gianpiero**
**Via dei Della Robbia n.89**
**I-50123 Firenze (IT)**
Inventor : **Andreini, Guido**
**Via O. da Pordenone n.36**
**I-50127 Firenze (IT)**

(74) Representative : **Mannucci, Michele**
**Ufficio Tecnico Ing.A. Mannucci, Via della Scala 4**
**I-50123 Firenze (IT)**

(54) **Geothermoelectronic energy generator.**

(57)   Energy from natural geothermal sources is exploited with a direct transformation of the magmatic heat in electrical energy, through means (11,13,17,19,21) deeply inserted in the soil, by means of the Seebeck's principle and/or the principle of thermoelectronic emission.

FIG. 2

EP 0 511 180 A1

The advantage offered by renewable energies derived from natural and inexhaustible sources to be found on the territory, lies manly on the fact that they have a natural impact on the environment. Among the renewable energies which offer concrete possibilities of being exploited in certain areas - such the Italian territorytides and winds are too insignificant to be taken into consideration on a sufficiently large scale. The thermal and photelectric solar energy is increasingly applied but with insuperable limits due to the weather and seasons, and with dead times at night.

Geothermal energy is instead significantly applied for use in thermomechanic-electrical generators. Their impact on the environment is far from unimportant and, in addition, they involve dramatic technical problems due to the dimension of the facilities required. Actually, many problems must be solved, among which: the need of refeeding the stratum; problems due to products (including mercury) entrained by the fumaroles onto the surface; the huge extension of the tubes which alter the landscape; the enormous size of the condensing hyperboloids; the condensate itself; and others.

The object of the present invention is to exploit the energy embodied in the magmatic heat.

According to the invention, there is provided a direct transformation of the heat present in the earth's crust into electrical energy through means deeply inserted in the soil.

Practically, the transformation may be achieved by utilizing the Seebeck's principle and/or the principle of the thermoelectronic emission.

According to a feasible embodiment, a thermoelectric pair is used such as the copper/germanium-silicon alloy pair, copper/constantan pair, copper/selenium pair. Provision may also be made for the transforming voltage-current ratio on the site through a d.c./a.c. converter and a transformer. The energy may also be conveyed onto the surface by utilizing the Thomson's effect along the connection region towards the surface, provided a sufficiently high temperature is present.

According to a further possible embodiment - especially with high temperatures exceeding 800°C - the thermoelectronic emission may be achieved in vacuo or in vapors atmosphere while cooling the anode.

The invention will be better understood by following the description and the attached drawing, which shows a practical, not limiting exemplification of the invention. In the drawing:

Fig. 1 shows two typical curves plotting the soil temperature in volcanic areas under attenuated conditions and in the presence of magma, respectively;

Fig. 2 shows an installation layout;

Fig. 3 shows an embodiment for a d.c/a.c converter;

Figs. 4 and 5 show an embodiment for a relaxation oscillator and a voltage graph;

Fig. 6 shows a wiring diagram for the in series connection of a plurality of generators to the cold junction on the surface;

Fig. 7 shows a wiring diagram for the connection of a plurality of generators with cold junctions in a hypogeum arrangement and surface dissipator;

Fig. 8 shows a sectional perspective view of a generator of thermoelectronic type;

Fig. 9 shows an installation layout of such a generator; and

Fig. 10 shows a set of fractionated generators.

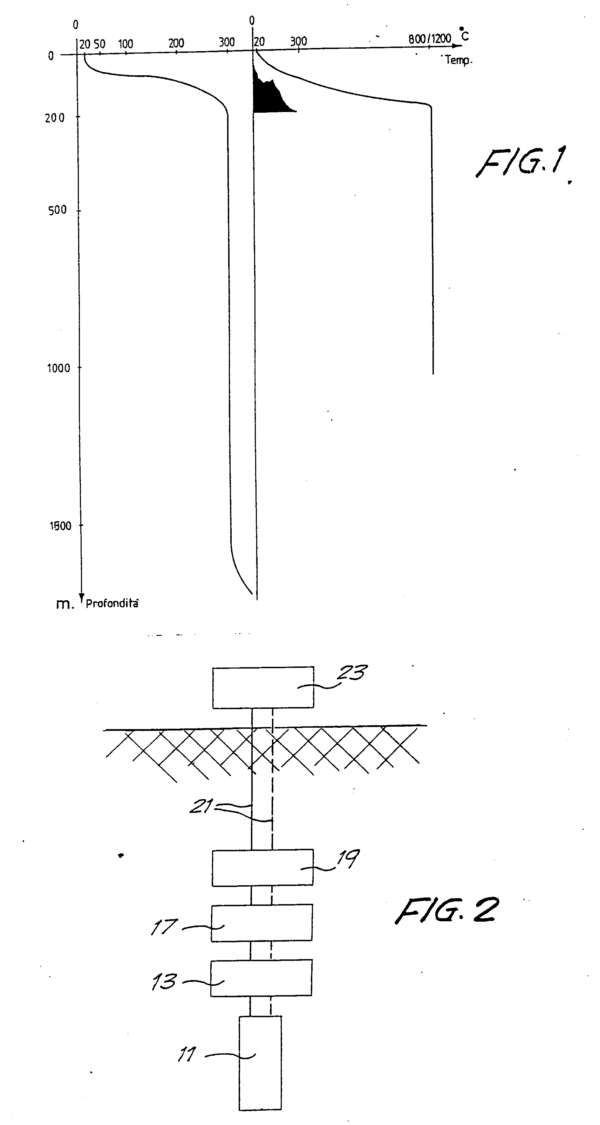

Among the geographical areas that possess such characteristics as to allow the utilization of the magmatic heat there are - for example - the Tuscany region south of river Arno, the northern and southern Lazio (within a coastal strip a hundred chilometers wide), the coastal Campania up to the river Sele; the Ionian Sicily. Tuscany, in particular, exhibits characteristics of large uniformity with the exception of some "hot" regions such as the surroundings of Monte Cetona, Arsenti, Valerio, Amiata. Over large areas, Tuscany offers steady temperatures of 250-300°C at a depth ranging from 200 to 1600 meters. Fig. 1 shows graphs of the temperature in the subsoil; the curve on the left refers to the temperature present in some regions of the above mentioned type, and the curve on the right refers to regions exhibiting magma at little depths.

All the considerations made herebelow are true for temperatures both in the order of 250-300°C and above, except for greater problems deriving from the materials to be used and from the reduced reproducibility of the phenomena, which is an advantageous requirement for a large exploitation on an industrial scale.

A generator, as already set forth, requires the presence of thermoelectrical pairs.

Thermoelectrical pairs that may be used are, for example: the copper/germanium-silicon pair, capable of generating a power density of 10 kW over 7.6 square meters at 1000°C; the copper/constantan pair, also capable of yielding 10 kW over 46 sqm at 600°C; the copper/selenium pair, yielding 10 kW over 3.5 sqm at 300°C.

The thermoelectric junction according to the present invention is made of a semiconductor material able to support at least a temperature of 400°C and to operate at a temperature of 300°C.

A transformation group shall be located within a drill hole mostly of traditional type and dimensions. However, in order to obtain the maximum extension of the cooperating surfaces, cylindrical concentric surfaces will be provided along which the two elements of the pair are located. The generator cylinder may be made of more concentric cylinders, in number of three or five, for example, having overall dimensions below 30 cm of diameter. However, the diameter of the cyclindrical group will be less than the maximum diameter of the drills currently in use, that is, of 30 cm at the most. A Se/Cu group having diameter of 30 cm and height of 4 meters within an ambient at 300°C may supply a remarkable quantity of energy.

Between the two thicknesses of a pair, the junction throughout the contact surface can be carried out, for example, with one of the following methods: power laser-operated spot-welding on small areas spaced apart of a few millimeters; diffusion in vacuo of one element into the other over the whole surface of the support; sintering of the contact surfaces; mechanical interpenetration of one element into the other, carried out by prismatic shapes of beams of electrods of one element, likewise the "wire-wrap" technique, that is, the winding of a wire lead around a prismatic lead.

A sealing of the cyclindrical group shall finally be provided at its ends so as to seal the junction.

The above described arrangement allows limited dimensions and a large contact surface to be obtained by the combination of semiconductors using recently improved physical-chemical techniques, thereby achieving a very high energy concentration.

At relatively low temperatures, of the order of 300°C, which are likely to be found in large areas of the geological structure, the hot part of a group may be a cylinder of 30 cm of diameter and 1 m height which can generate 10 kW when formed by five concentric cylindrical pair layers separated by an insulator, the layers being connected in series or in parallel. The cold part of the group may be formed by the leads reaching the surface of the ground. The pair obtained as described above represents a current generator 11 (Fig. 2) of some millivolts and some millions of amperes, and may be placed at a depth of at least two-hundred meters.

In order to bring the energy on the surface for the use thereof, it is necessary to carry out the voltage-current transformation locally, i.e. at the above mentioned depths. To this end, provision must be made for a d.c./a.c. converter, a step-up transformer, and a rectifier if necessary.

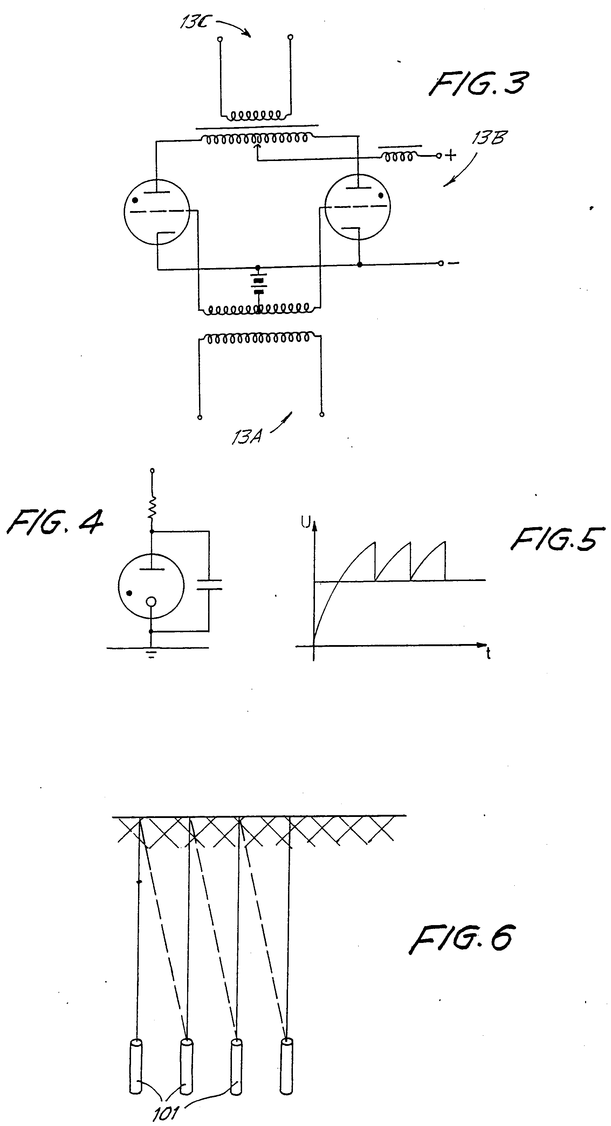

A DC-AC converter is indicated by 13 in the drawing and may be formed by a plurality of oscillators connected in parallel (Fig. 3), which are self-powered at the relevant depts by deriving a small part of the generated energy, or fed by a small surface oscillator via a 200-meter line; 13A represents the a.c. excitation, 13B the d.c. input and 13C the output. The converter shall be designed to operate continuously at 300°C and may include either a thyratron or an ignitron to fit the strong currents. Alternatively, relaxation oscillators may be used (Fig. 4) which, in this case, make the excitation easier; Fig. 5 shows the oscillation of the voltage versus time.

A transformer 17 is intended to shift from a few tens of millivolts up to a few hundreds of volts. The transformer too must be designed with insulating silicon resins able to withstand the temperatures present in the deep layers where the generator is located.

Advantageously, in case of relatively high temperatures an a.c./d.c. converter or rectifier 19 may be provided along the path of energy transmission (Fig. 2) towards the user 23 to power the transfer line 21 which reaches the surface via two leads prefereably having characteristics that meet those of the junction pair (for example, of germanium-silicon and copper) in order to take advantage of the Thomson's effect which adds up to the Seebeck's effect along all the connection where a temperature gradient is present equal to:

$$E_{AB}(T_1, T_0) = \Pi_{A,B}(T) - \Pi_{A,B}(T_0) + \int_{T_0}^{T} \left[ \epsilon_A(t) - \epsilon_B(t) \right] dt$$

The development of the opposite surfaces of the above mentioned leads of line 21 may be of a few centimeters, owing to the usual voltage-current ratio obtained after the transformations carried out at hypogeum level.

Alternatively to what has been indicated above, other criteria may be followed for the transmission of energy to the surface.

A transmission to the surface may be provided by two leads of remarkable diameter, without provision of the above described transformations, but with significant investments in semi-precious materials.

A disposition of more thermoelectric pairs in series (Fig. 6), i.e. of more groups 101, may be provided for the obtainment of higher voltages, but by bringing to the surface (cold junction) every single pair and with the same drawbacks as mentioned above. Provision may also be made for at least a partial assembly in parallel.

It is possible to use generators of more limited power with leads of more acceptable dimensions and series connection on the surface, but with the use of larger areas and, anyhow, higher costs.

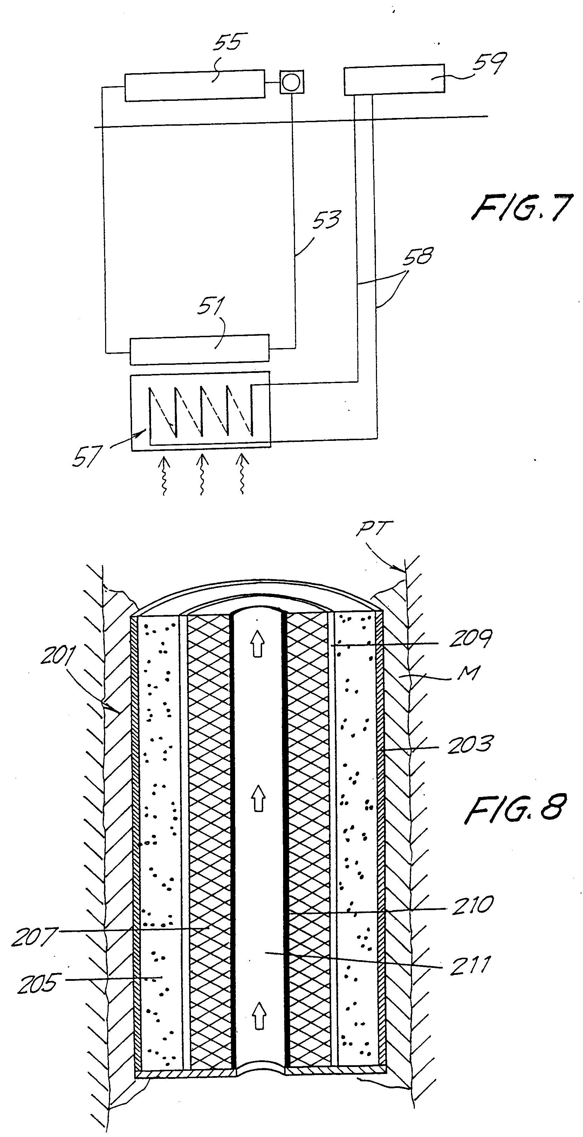

Mixed techniques may also be employed such as the hypogeum cooling of the "cold" junction by means of heat exchanger 51 located in a closed circuit 53 with a liquid coming from the surface where a dissipator 55 is provided, and with a series of hypogeum thermopairs 57 (Fig. 7) and a transfer line 58 for the user 59. This solution has the advantage of obtaining a hot fluid on the surface which may be further utilized in the dissipator 55, but requires pumps for circulating the cooling fluid, which require energy and with a difficult arrangement of the exchanger 51.

A thermoelectronic solution is useful for high temperatures as in those cases where a source having reasonably constant but high temperature is available, with hot spots at 800-1200°C such as in the presence of active or quiescent volcanic formations. This solution suitably utilizes the thermoelectronic effect.

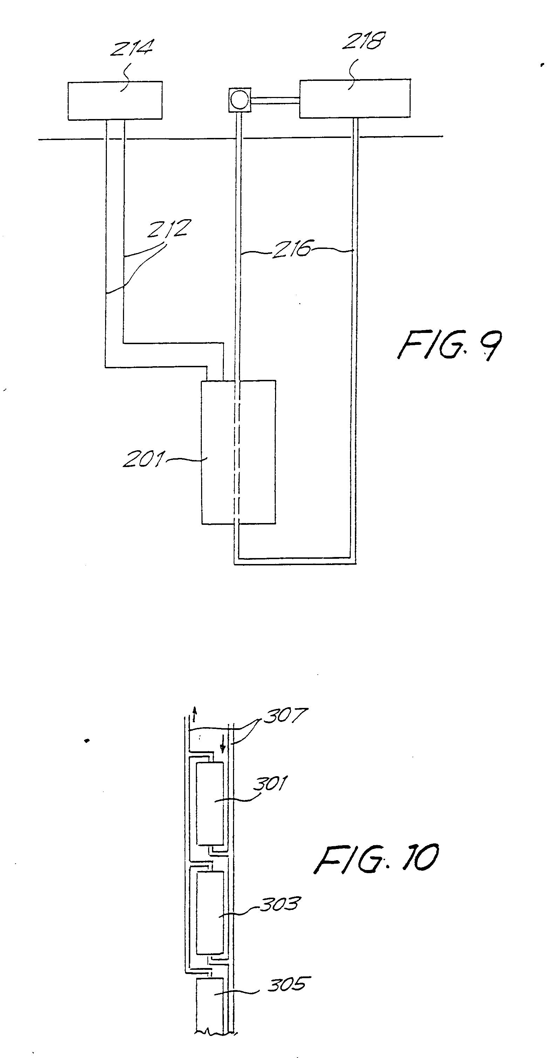

In this case, the generator 201 (Fig. 8) may be obtained by providing a thermoelectric pair in vacuo or in an atmosphere of vapors of cesium, lythium or potassium, by placing the cathode and the anode opposite to each other and spaced apart of even a few thousandth of a millimeter (because of the very low voltage between them) and by cooling the anode with forced circulation by means of hydraulic pumps operated from the surface and which may be powered by the generator itself. The construction of the generator 201 may be as shown in Fig. 8 where 203 indicates the outer protection, 205 is the cathode (which must reach high temperatures in the range of 800-1200°C), 207 is the anode (which must be kept at a temperature not higher than 650°C), 209 is the vacuum gap between anode and cathode and 210 is the thermal exchange wall for controlling the anode temperature; the construction may consist of coaxial layers. Special solutions may be used, by one hand, for trasmitting the heat to the cathode 205 so as to reach and maintain a temperature of 800-1200°C, and on the other, for insulating, on the side of the anode, the heat exchanger from the surrounding ambient and allow an easy dispersion of the heat towards the cooling liquid which circulates within the conduit 211 defined by the wall 210, in order to reach temperatures of 400-650°C at the anode. In particular, provision may be made for the interposition, between the drill wall PT and the outer wall 203, of a protection and regulation mass M to protect the generator 201 against corrosions especially of mechanical and/or chemical kind, and to adjust the temperature outside the generator. This mass M should be such as to allow the recovery of the generator for the replacement thereof in those cases in which it is not convenient to destroy it by a drilling operation in the area where the generator is located. Fig. 9 shows a layout with the generator 201 connected, via the line 212, to the user 214 for the trasmission of electric power thereto; 216 indicates the forced-circulation cooling circuit to remove heat from the anode 207 and feed said heat to the exchanger 218 located on the ground, where the heat of the liquid may represent a further useful source of energy.

Supposing an energy density of 5 W/cm$^2$ (densities two times greater have been obtained in spatial facilities) and using a thermoelectronic generator of cylindrical shape (suited to the drill dimensions), it will be possible to achieve a megawatt by providing a diameter of 30 cm and a height of 10 m (1000000/1.884x5x10000 = 10.6 m) according to the following formula:

$$h = P / 2\pi \cdot d$$

wherein:

h = height of the cylinder in meters
P = power (1 MW)
d = energy density

Even if practical reasons related to the cooling of the anode would suggest reduced height - in the order of 3 meters - of the generator cylinder, the fact that a cylinder of 30 cm of diameter and 10 meters of height located at a depth of few tens of meter is able to generate 1 MW of free and available power is extremely promising when considering also the modest technological problems involved.

To simplify the construction and installation, and to ensure sufficiently uniform thermal gradients within a suitable range, more generators (Fig. 10) may be provided such as those indicated by 301, 303, 305 and disposed adjacent to each other inside the drill, and with cooling circuits 307 which may be self-contained or derived from a common circuit.

The above described generators have the following advantages, among others:

1 - Reduced investments with respect to those for thermoelectric plants with conventional or nuclear fuel;
2 - No consumption of fuel;
3 - Utilization of natural energy present in many localities, absolutely free of charge, stable and inexhaustible;
4 - Neither pollution nor alteration of the environment;
5 - Minimum or no surface areas required;
6 - Generation of energy locally and distributed over the territory, thereby eliminating problems of transportation facilities such as towers and overhead lines, save for the those needed locally;
7 - Materials, techniques, equipment already available, except for a small-scale test to be carried out on the surface.

It is understood that the drawing shows only a practical demonstration of the invention, as this may vary in the forms and dispositions without, nevertheless, departing from the scope of the idea on which the same invention is based.

## Claims

1. Method for the utilization of energy from natural sources, characterized in that it comprises a direct transformation of the heat of volcanic origin into electrical energy through means deeply inserted in the soil.

2. Method according to claim 1, characterized in that the transformation is achieved by exploiting the Seebeck's principle.

3. Method according to claim 1, characterized in that the transformation is achieved by applying the principle of the thermoelectronic emission.

4. Method according to claim 2, characterized by the use of a thermoelectric pair such as the copper/germanium-silicon alloy pair, copper/constantan pair, copper/selenium pair.

5. Method according to any preceding claim, characterized by the transformation on the site of the voltage-current ratio by means a d.c./a.c. converter and a transformer.

6. Method according to any preceding claim, characterized by the transmission of energy onto the surface by exploiting the Thomson's effect along those regions where a temperature gradient is present.

7. Method according to claims 1 and 3, characterized by the use of thermoelectric pairs in vacuo or with vapors and with forced-circulation cooling.

8. Method according to any preceding claim, characterized in that it comprises the use of more generators connected in series and/or in parallel on the surface or locally in the ground.

9. Method according to any preceding claim, characterized by the use of heat deriving from the cooling of thermopairs through a dissipator located on the ground.

10. Method as described and illustrated.

11. Plant for carrying out the method at least of claims 1 and 2, characterized in that it comprises at least a hypogeum generator having cylindrical development with a thermoelectric pair having cylindrical surfaces or more coaxial and concentric pairs, said generator being suitable for fitting into a drilled hole.

12. Plant according to claim 11, characterized in that it comprises a converter and a transformer in hypogeum position for the transmission of the energy on the ground.

13. Plant according to claim 11, characterized in that it comprises, for the transmission on the ground, leads forming pairs able to exploit the Thomson's effect in the hot regions of the transmission path.

14. Plant according to any of claims 11 to 13, characterized in that it comprises a hypogeum rectifier downstream of the transformer, to feed the leads for the surface transmission.

15. Plant according to any of claims 11 to 14, characterized in that it comprises an oscillator converter (Fig. 3).

16. Plant according to any of claims 11 to 14, characterized in that it comprises a relaxation oscillator (Fig. 4).

17. Plant for carrying out the method at least of claims 1 and 3, characterized in that it comprises a thermoelectronic emission generator with cylindrical development, with outer hot cathode, inner cold anode and axial cooling circuit with forced circulation, suitable to be arranged inside a drilled hole.

18. Plant according to one or more of claims 11 to 17, characterized in that it comprises more individual generators housed into drilled holes and connected in series and/or in parallel to each other.

19. Plant according to one or more of claims 11 to 18, characterized in that it comprises a cooling liquid circuit with surface exchanger able to use calorific energy transmitted by said circuit, single circuits or a common circuit for more generators in a same drill hole being provided.

20. Plant according to any of claims 11 to 19, characterized by providing a mass between the generator and the wall of the drill hole.

FIG.1

m. Profondità

FIG.2

FIG. 3

FIG. 4

FIG.5

FIG.6

FIG.7

FIG.8

FIG. 9

FIG. 10

European Patent Office

# EUROPEAN SEARCH REPORT

Application Number

EP    92 83 0193

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 047 093 (LEVOY)<br>* column 4, line 50 - column 10, line 51; figures 1-10 * | 1-20 | H02N11/00<br>F24J3/08 |
| X | PATENT ABSTRACTS OF JAPAN<br>vol. 9, no. 162 (M-394)6 July 1985<br>& JP-A-60 035 182 ( SHIN NIPPON SEITETSU KK ) 22 February 1985 | 1-6,8,<br>17-19 | |
| A | * abstract * | 7,20 | |
| X | DE-A-3 326 059 (POISEL)<br>* page 9, line 5 - page 10, line 10; figures 1-3 * | 1,8 | |
| X | GB-A-1 454 991 (GARNET MONTAGUE EVELEIGH)<br>* the whole document * | 1-5 | |
| X | GB-A-2 145 876 (SHLOMO BEITNER)<br>* page 2, line 2 - page 2, line 122; figure 1 * | 1,3 | |
| X | US-A-4 292 579 (CONSTANT)<br><br>* column 5, line 8 - column 5, line 24 *<br>* column 6, line 57 - column 7, line 3 *<br>* column 18, line 7 - column 18, line 37; figures 1-4 * | 1-3,6,8,<br>9 | TECHNICAL FIELDS SEARCHED (Int. Cl.5 )<br><br>H02N |

The present search report has been drawn up for all claims

| Place of search | Date of completion of the search | Examiner |
|---|---|---|
| THE HAGUE | 20 JULY 1992 | BELTZUNG F.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)